# EUROPÄISCHE PATENTSCHRIFT

(11) **EP 1 107 878 B1**
(45) Veröffentlichungstag und Bekanntmachung des Hinweises auf die Patenterteilung: **29.12.2004**
(21) Anmeldenummer: 00925236.2
(22) Anmeldetag: 22.04.2000
(51) Int. Cl.: B60N 2/28

(54) **BEFESTIGUNGSVORRICHTUNG FÜR EINEN KINDERSITZ**
CHILD SEAT FIXING DEVICE
DISPOSITIF DE FIXATION POUR SIEGE ENFANT

(30) Priorität: 24.06.1999 DE 19928862
(43) Veröffentlichungstag der Anmeldung: 20.06.2001
(73) Patentinhaber: KEIPER GmbH & Co. KG, 67657 Kaiserslautern (DE)
(72) Erfinder: HERRMANN, Manfred, D-67661 Kaiserslautern (DE); LIEDHEGENER, Ralf, D-67705 Trippstadt (DE); REIMER, Peter, D-67229 Grosskarlbach (DE); UTSCH, Heiko, D-67657 Kaiserslautern (DE); WAGNER, Michael, D-66386 St. Ingbert (DE); ZIRNSTEIN, Bodo, D-67663 Kaiserslautern (DE)
(74) Vertreter: Patentanwälte Hosenthien-Held und Dr. Held
(86) Internationale Anmeldenummer: PCT/EP2000/003668
(87) Internationale Veröffentlichungsnummer: WO 2001/000436

(56) Entgegenhaltungen:
- EP-A- 0 901 935
- EP-A- 0 976 607
- DE-A- 19 827 057
- DE-C- 19 738 802
- DE-C- 19 822 134
- DE-C- 19 834 847
- DE-C- 19 850 255
- US-A- 5 918 934

## Beschreibung

Die Erfindung betrifft eine Befestigungsvorrichtung für einen Kindersitz auf einem Fahrzeugsitz mit den Merkmalen des Oberbegriffs des Anspruches 1.

Aus der DE 197 38 802 C1 ist eine Befestigungsvorrichtung dieser Art bekannt, bei der das Befestigungselement durch einen Riegel, der in seiner Längsrichtung beweglich und federbeaufschlagt ist, in seiner Gebrauchsstellung gehalten wird. Für eine ähnliche Befestigungsvorrichtung wird in der EP 0 901 935 A2 vorgeschlagen, eine Verzahnung zwischen Befestigungselement und Quertraverse vorzusehen. Eine Lösung mit einem im wesentlichen linear beweglichen Befestigungselement ist in der DE 198 22 134 C1 beschrieben.

Der Erfindung liegt die Aufgabe zu Grunde, eine Befestigungsvorrichtung der eingangs genannten Art zu verbessern. Diese Aufgabe wird erfindungsgemäß durch eine Befestigungsvorrichtung mit den Merkmalen des Anspruches 1. Vorteilhafte Ausgestaltungen sind Gegenstand der Unteransprüche.

Dadurch, daß das Riegelelement in der Gebrauchsstellung unter Formschluß mit der Quertraverse verriegelt, um das Befestigungselement relativ zur Quertraverse zu verriegeln, ist die Gebrauchsstellung mit höheren Kräften belastbar als bei der bekannten Befestigungsvorrichtung. Dies ist insbesondere bei der Montage des Kindersitzes von Vorteil, wenn nur eine Hand zur Verfügung steht oder der Kindersitz zur Montage etwas schräg angesetzt wird. Das Befestigungselement, von dem in der Regel zwei Stück für jeden zu befestigenden Kindersitz vorgesehen sind, ist auf einer sitzstrukturfesten oder fahrzeugstrukturfesten Quertraverse schwenkbar gelagert ist. Das Befestigungselement nimmt beim Schwenken in die Parkstellung (und zurück) das Riegelelement mit, so daß die Relativposition von Riegelelement und Befestigungselement erhalten bleibt, was das Verriegeln in der Gebrauchsstellung erleichert. Außerdem kann dann ein und dasselbe Riegelelement sowohl in der Gebrauchsstellung als auch in der Parkstellung wirksam sein und zur Sicherung des Befestigungselementes eingesetzt werden.

Die Wirkungsrichtung des Riegelelementes kann in der Schwenkebene des Befestigungselementes liegen, vorzugsweise aber senkrecht dazu. Für eine Unterstützung des Übergangs in die verriegelte Stellung und als Sicherung, um in dieser Stellung zu bleiben, kann das Riegelelement auf diese Stellung zu federbelastet sein. Zum Entriegeln des Riegelelementes ist vorzugsweise ein Lösehebel, Betätigungsgriff oder Schieber vorgesehen.

Bei einer bevorzugten Ausführungsform ist das Riegelelement an dem Befestigungselement angeordnet, d.h. in geeigneter Weise angebracht, beispielsweise drehfest angeordnet, gemeinsam gelagert oder anderweitig verbunden. Das Riegelelement kann beispielsweise auf einer Rastfeder oder einer Blattfeder angeordnet sein. Das erfindungsgemäße Riegelelement kann zusammen mit dem Befestigungselement eine vorgefertigte Baugruppe bilden, was die Herstellung vereinfacht und dadurch verbilligt. Das Riegelelement kann aber auch an der Quertraverse angebracht sein, beispielsweise angelenkt sein, insbesondere auf dem Lagerzapfen des Befestigungselementes.

Für ein sicheres Verriegeln ist es von Vorteil, wenn das Riegelelement einen Vorsprung aufweist, der mit einer Aufnahme des Befestigungselementes oder der Quertraverse zusammenwirkt und beim Verriegeln in diese greift. Die Ausbildung des Vorsprungs und der Aufnahme kann auch am jeweils anderen Bauteil erfolgen. Im Falle des auf dem Befestigungselement angeordneten Riegelelementes vereinfacht sich ein gegebenenfalls später erwünschter Ein- oder Abbau des Befestigungselementes. Die Quertraverse, welche dann beispielsweise die einfach herzustellende Aufnahme für das Riegelelement aufweist, kann auch zunächst ohne Befestigungselemente eingebaut werden, zugleich aber für eine optionale Anbringung der Befestigungselemente im Bedarfsfall vorbereitet sein.

Ein erfindungsgemäßer Fahrzeugsitz, insbesondere ein Kraftfahrzeugsitz, beispielsweise eine Rücksitzbank, weist zwischen der Rückenlehne und dem Sitzkissen eine erfindungsgemäße Befestigungsvorrichtung auf, die sitzstrukturfest oder fahrzeugstrukturfest angebracht sein kann. Die Erfindung kann auch bei Fluggastsitzen eingesetzt werden.

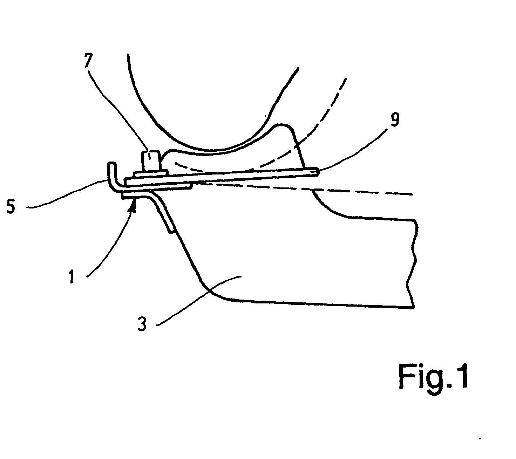

Im folgenden ist die Erfindung anhand von vier in der Zeichnung dargestellten Ausführungsbeispielen näher erläutert. Es zeigen
- Fig. 1: eine schematische Seitenansicht des Fahrzeugsitzes mit erfindungsgemäßer Befestigungsvorrichtung, bei dem die Polsterung nur angedeutet ist,

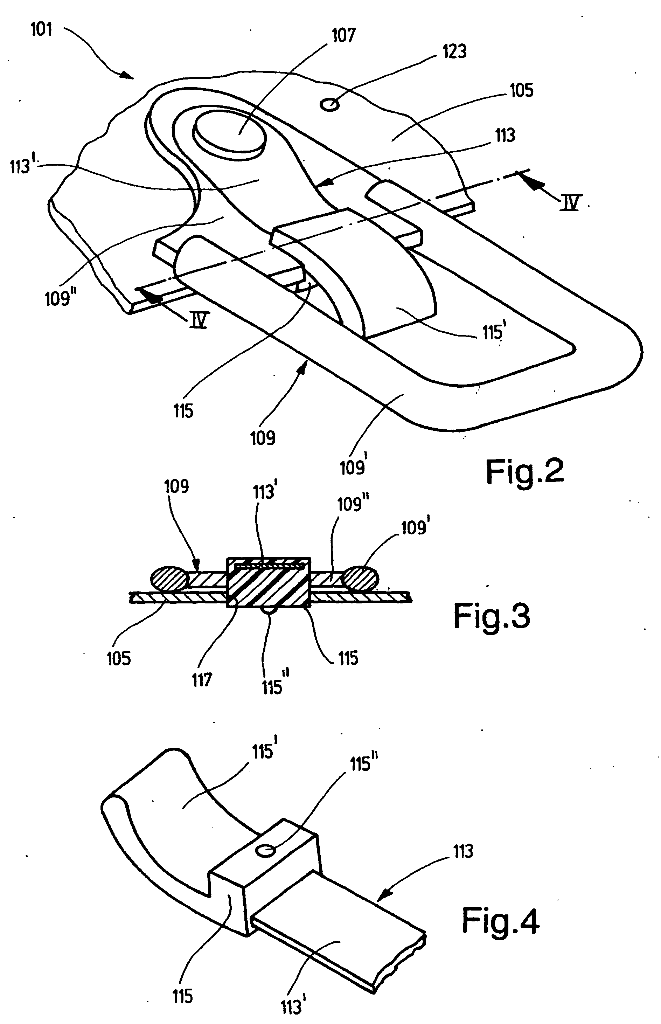

- Fig. 2: eine perspektivische Ansicht des ersten Ausführungsbeispiels im Bereich des rechten Befestigungselementes,
- Fig. 3: einen Schnitt entlang der Linie IV-IV in Fig. 2,
- Fig. 4: eine perspektivische Teilansicht der Unterseite des Riegelelementes von Fig. 2,

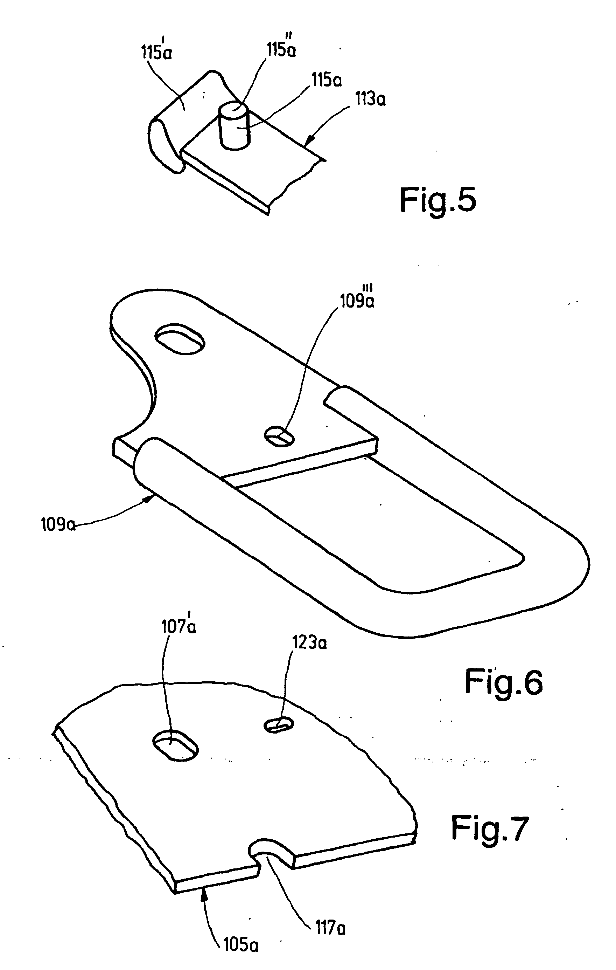

- Fig. 5: eine perspektivische Teilansicht der Unterseite eines Riegelelementes des zweiten Ausführungsbeispiels,
- Fig. 6: eine perspektivische Ansicht eines Befestigungselementes des zweiten Ausführungsbeispiels,
- Fig. 7: eine perspektivische Teilansicht der Quertraverse des zweiten Ausführungsbeispiels,

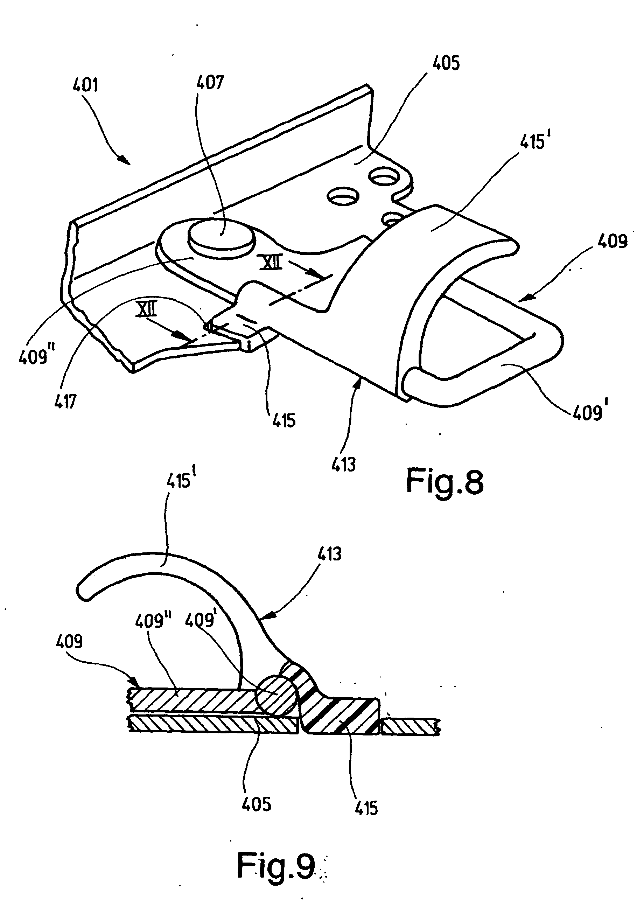

- Fig. 8: eine perspektivische Ansicht des dritten Ausführungsbeispiels im Bereich des linken Befestigungselementes,
- Fig. 9: einen Schnitt entlang der Linie XII-XII in Fig. 8,

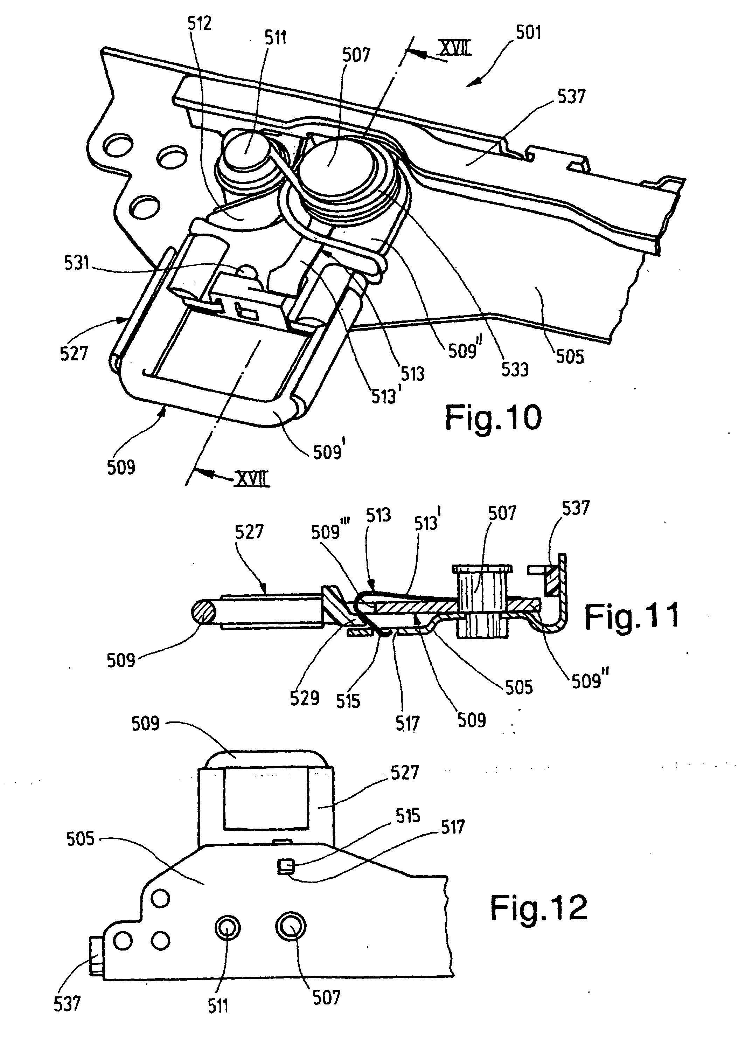

- Fig. 10: eine perspektivische Ansicht des vierten Ausführungsbeispiels im Bereich des rechten Befestigungselementes,
- Fig. 11: einen Schnitt entlang der Linie XVII-XVII in Fig. 10, und
- Fig. 12: eine Ansicht des in Fig. 10 dargestellten Teiles von unten.

Bei einer Befestigungsvorrichtung 1 für einen Kraftfahrzeugsitz 3 ist eine ungefähr horizontal verlaufende Quertraverse 5 zwischen den beiden Seiten des Kraftfahrzeugsitzes 3 im Bereich zwischen Sitzkissen und Rückenlehne, beispielsweise zwischen den Beschlägen, befestigt. Auf der Quertraverse 5 ist mit einem gewissen Abstand zu den Seiten des Kraftfahrzeugsitzes 3 jeweils ein Lagerzapfen 7 angebracht. Auf jedem der beiden Lagerzapfen 7 ist ein Befestigungselement 9 drehbar gelagert, das in einer ungefähr horizontalen Ebene schwenkbar ist.

Die beiden Befestigungselemente 9 sind spiegelsymmetrisch ausgebildet. Jedes Befestigungselement 9 besteht aus einem bügelförmigen Teil 9', der mit einem Konnektor eines nicht dargestellten Kindersitzes zur Befestigung desselben auf dem Kraftfahrzeugsitz 3 zusammenwirkt, und aus einem laschenförmigen Teil 9", der den Lagerzapfen 7 umschließt. In der Gebrauchsstellung der beiden Befestigungselemente 9 stehen die bügelförmigen Teile 9' in Fahrtrichtung nach vorne vor, während in der Parkstellung die Befestigungselemente 9 parallel zur Quertraverse 5 geschwenkt sind, so daß die bügelförmigen Teile 9' aufeinander zu zeigen.

Soweit vorstehend nicht abweichend beschrieben, stimmen die Ausführungsbeispiele bezüglich ihrer Merkmale und Eigenschaften überein. Entsprechende Bauteile tragen daher um jeweils 100 unterschiedliche Bezugszeichen.

Im ersten Ausführungsbeispiel sind bei einer Befestigungsvorrichtung 101 auf einer Quertraverse 105 zwei Lagerzapfen 107 angebracht. Auf jedem der beiden Lagerzapfen 107 ist ein Befestigungselement 109 schwenkbar gelagert, das nahezu denselben Aufbau mit einem bügelförmigen Teil 109' und einem laschenförmigen Teil 109" und die gleichen Funktionen aufweist wie zuvor beschrieben.

Auf jedem Lagerzapfen 107 ist ferner ein Riegelelement 113 angeordnet, das in diesem Bereich mit dem Befestigungselement 109 verbunden ist. Das Riegelelement 113 weist eine Blattfeder 113' auf, die sich in der Mitte des Befestigungselementes 109 zwischen dem Lagerzapfen 107 und dem Randbereich des laschenförmigen Teils 109" zwischen den Ansatzstücken des bügelförmigen Teils 109' erstreckt. Am letztgenannten Ende ist auf der Blattfeder 113' ein ungefähr quaderförmiger Rastblock 115 aus Kunststoff befestigt, an dem auf der der Blattfeder 113' abgewandten Seite ein Betätigungsgriff 115' einstückig ausgebildet ist. Auf der Unterseite des Rastblocks 115 ist eine Erhebung 115'' vorgesehen.

Das Riegelelement 113 greift mit seinem Rastblock 115 durch eine rechteckförmige Aussparung des laschenförmigen Teils 109". In der Gebrauchsstellung greift das Riegelelement 113 mit dem Rastblock 115 zugleich formschlüssig durch eine darunter angeordnete, ebenfalls rechteckförmige Aufnahme 117 der Quertraverse 105. Dadurch wird das Befestigungselement 109 verriegelt. Beim Übergang in die Gebrauchsstellung nimmt durch die Kraft der Blattfeder 113' der Rastblock 115 ohne weiteres Zutun die beschriebene Stellung innerhalb der Aufnahme 117 ein. Durch den Formschluß ist das Befestigungselement 109 in der Gebrauchsstellung mit vorzugsweise 100 N belastbar.

Zum Entriegeln kann der Rastblock 115 über den Betätigungsgriff 115' angehoben und aus der Aufnahme 117 herausgehoben werden. Das Befestigungselement 109 kann dann in die Parkstellung geschwenkt werden. In der Quertraverse 105 ist eine Vertiefung 123 vorgesehen, in die bei Erreichen der Parkstellung die Erhebung 115" auf der Unterseite des Rastblocks 115 greift. Damit ist das Befestigungselement 109 auch in der Parkstellung gesichert.

Das zweite Ausführungsbeispiel ist eine Abwandlung des ersten Ausführungsbeispiels, weshalb entsprechende Bauteile ein um den Buchstaben "a" ergänztes Bezugszeichen tragen. Nicht näher beschriebene Bauteile des zweiten Ausführungsbeispiels und deren Funktion stimmen mit denjenigen des ersten Ausführungsbeispiels überein. Eine Quertraverse 105a weist eine Aufnahme 117a auf, welche in Fahrtrichtung vor einer Bohrung 107'a für einen Lagerzapfen angeordnet ist und welche an der Vorderkante der Quertraverse 105a als U-förmiger Einschnitt ausgebildet ist. Um 90° bezüglich der Bohrung 107'a versetzt hierzu weist die Quertraverse 105a eine leicht längliche Vertiefung 123a auf, welche auch als ein die Quertraverse 105a durchdringendes Langloch ausgebildet sein kann. Ein Befestigungselement 109a mit einem bügelförmigen Teil und einem laschenförmigen Teil weist im laschenförmigen Teil eine langlochförmige Aussparung 109"'a auf, welche in der Gebrauchsstellung oberhalb der Aufnahme 117a angeordnet ist. Ein Riegelelement 113a mit einer Blattfeder weist im Bereich seines freien Endes, an welchem ein Betätigungsgriff 115'a angebracht ist, auf der Unterseite einen nach unten abstehenden, zylindrischen Raststift 115a mit einer kugelförmig abgerundeten Kuppe 115"a auf.

Zum Verriegeln des Befestigungselementes 109a mit der Quertraverse 105a greift der Raststift 115a durch die Aussparung 109'''a hindurch in die Aufnahme 117a. Beim Übergang in die Parkstellung wird der Raststift 115a aus der Aufnahme 117a ausgehoben, nicht jedoch aus der Aussparung 109'''a, deren Berandung als Anschlag zur Begrenzung der Aushebebewegung des Raststiftes 115a dient. Mit Erreichen der Parkstellung gelangt der Raststift 115a mit seiner Kuppe 115"a in die Vertiefung 123a der Quertraverse 105a, wobei die Kuppe 115"a vorzugsweise einen im Vergleich zur Vertiefung 123a größeren Durchmesser aufweist, damit sie sich selbst zentrierten kann.

Im dritten Ausführungsbeispiel sind bei einer Befestigungsvorrichtung 401 ebenfalls auf einer Quertraverse 405 zwei Lagerzapfen 407 angebracht. Auf jedem der beiden Lagerzapfen 407 ist ein Befestigungselement 409 schwenkbar gelagert, das nahezu denselben Aufbau mit einem bügelförmigen Teil 409' und einem laschenförmigen Teil 409" und die gleichen Funktionen aufweist wie oben beschrieben.

Auf dem innen gelegenen, seitlichen Schenkel des bügelförmigen Teils 409' ist ein Riegelelement 413 aufgeclipst. Das als Kunststoff-Spritzteil gefertigte Riegelelement 413 ist über einen gewissen Winkelbereich schwenkbar, wobei der Schenkel des bügelförmigen Teils 409' die in Längsrichtung des Befestigungselementes 409 orientierte Schwenkachse bildet. An dem zum laschenförmigen Teil 409" gewandten Ende des Riegelelementes 413 weist dieses einen Rastblock 415 auf, der seitlich vom Befestigungselement 409 absteht. Befindet sich das Befestigungselement 409 in der Gebrauchsstellung, so greift der Rastblock 415 formschlüssig in eine an der Vorderkante der Quertraverse 405 vorgesehen Aufnahme 417 und verriegelt dadurch das Befestigungselement 409 bis zu einer Belastung von vorzugsweise 100 N.

An dem vom Rastblock 415 abgewandten Ende weist das Riegelelement 413 einen nach oben abstehenden, gekrümmten Betätigungsgriff 415' auf, der sich auf der vom Rastblock 415 abgewandten Seite zum anderen Schenkel des bügelförmigen Teils 409' hin biegt. Durch eine nicht dargestellte Feder oder durch Reibung zwischen dem Riegelelement 413 und dem Schenkel des bügelförmigen Teils 409' wird der Betätigungsgriff 415' oben gehalten. Zum Entriegeln wird der Betätigungsgriff 415' nach unten gedrückt, wodurch das Riegelelement 413 um den Schenkel des bügelförmigen Teils 409' schwenkt. Dadurch schwenkt der Rastblock 415 aus der Aufnahme 417 heraus nach oben und gibt das Befestigungselement 409 zum Schwenken in die Parkstellung frei.

Das vierte Ausführungsbeispiel betrifft eine Befestigungsvorrichtung 501, die teilweise dem ersten Ausführungsbeispiel gleicht, weshalb entsprechende Bauteile um 400 höhere Bezugszeichen tragen. Auf einer Quertraverse 505 ist an jedem Ende mittels je eines ersten Lagerzapfens 507 je ein Befestigungselement 509 schwenkbar gelagert, welches einen bügelförmigen Teil 509' und einen laschenförmigen Teil 509" aufweist. Mittels eines zweiten Lagerzapfens 511 ist eine Klinke 512 auf der Quertraverse 505 schwenkbar gelagert. Ein Riegelelement 513, welches wie im zweiten Ausführungsbeispiel eine Blattfeder 513' aufweist, ist mittels des ersten Lagerzapfens 507 an dem laschenförmigen Teil 509" angebracht, d.h. relativ zu diesem drehfest angeordnet. Das freie Ende der Blattfeder 513' ist als Federhaken 515 ausgebildet, welcher zunächst durch eine U-förmige Aussparung 509''' im laschenförmigen Teil 509" und dann, in der Gebrauchsstellung des Befestigungselementes 509, in eine Aufnahme 517 der Quertraverse 505 greift. Die Aufnahme 517 ist als eine durch die Quertraverse 505 hindurchgehende Öffnung von etwa quadratischem Querschnitt so ausgebildet, daß in der Waagerechten ein Formschluß besteht.

Ein Schieber 527 ist an dem Befestigungselement 509 in Längsrichtung desselben verschiebbar angeordnet, d.h. auf den ersten Lagerzapfen 507 zu und von diesem weg. Vorzugsweise wird der Schieber 527 dadurch geführt, daß er die in Längsrichtung weisenden Schenkel des bügelförmigen Teiles 509' wenigstens teilweise umschließt. Der Schieber 527 weist einen Keil 529 auf, welcher innerhalb der Aussparung 509''' angeordnet ist. Ausgehend von der Gebrauchsstellung wird bei einer vom Benutzer durch Drücken bewirkten Bewegung des Schiebers 527 auf den ersten Lagerzapfen 507 zu der Keil 529 gegen den Federhaken 515 gedrückt. Über die schräg nach oben weisende Keilfläche des Keiles 529 wird der Federhaken 515 nach oben gedrückt, so daß der Federhaken 515 die Aufnahme 517 verläßt, wodurch das Befestigungselement 509 entriegelt ist. Eine Druckfeder 53), zwischen dem laschenförmigen Teil 509" und dem Schieber 527 sorgt dafür, daß ohne äußere Krafteinwirkung der Keil 529 nicht auf den Federhaken 515 drückt.

Eine um den ersten Lagerzapfen 507 gewickelte Vorspannfeder 533 belastet das Befestigungselement 509, so daß dieses außerhalb der Parkstellung in die Gebrauchsstellung schwenkt. Die Vorspannfeder 533 ist in ihrem weiteren Verlauf um den zweiten Lagerzapfen 511 gewickelt und spannt die Klinke 512 auf das Befestigungselement 509 zu. In der Parkstellung greift die Klinke 512 in eine entsprechende Aufnahme des Befestigungselementes 509. Mittels einer Entriegelungsstange 537 können die beiden Klinken 512 an beiden Enden der Quertraverse 505 so geschwenkt werden, daß diese die zugeordneten Befestigungselemente 509 freigeben. Jedes Befestigungselement 509 schwenkt dann aufgrund der Kraft der Vorspannfeder 533 in die Gebrauchsstellung, wo der Federhaken 515 des Riegelelementes 513 aufgrund dessen Federkraft in die Aufnahme 517 der Quertraverse 505 greift und das Befestigungselement 509 verriegelt.

### Bezugszeichenliste

- 1, 101, 401, 501: Befestigungsvorrichtung
- 3: Kraftfahrzeugsitz
- 5, 105, 105a, 405, 505: Quertraverse
- 7, 107, 407, 507: (erster) Lagerzapfen
- 9, 109, 109a, 409, 509: Befestigungselement
- 9', 109', 409', 509': bügelförmiger Teil
- 9", 109", 409", 509": laschenförmiger Teil
- 113, 113a, 413, 513: Riegelelement
- 117, 117a, 417, 517: Aufnahme
- 113', 513': Blattfeder
- 115,415: Rastblock
- 115', 115'a, 415': Betätigungsgriff
- 115": Erhebung
- 123, 123a: Vertiefung
- 107'a: Bohrung
- 109"'a, 509"': Aussparung
- 115a: Raststift
- 115''a: Kuppe
- 511: zweiter Lagerzapfen
- 512, 612: Klinke
- 515: Federhaken
- 527, 627: Schieber
- 529: Keil
- 531: Druckfeder
- 533: Vorspannfeder
- 537: Entriegelungsstange

## Patentansprüche

1. Befestigungsvorrichtung für einen Kindersitz auf einem Fahrzeugsitz, insbesondere auf einem Kraftfahrzeugsitz, mit wenigstens einem Befestigungselement (109; 109a; 409; 509), das auf einer sitz- oder fahrzeugstrukturfesten Quertraverse (105; 105a; 405; 505) schwenkbar gelagert und zwischen einer Gebrauchsstellung und einer Parkstellung beweglich ist, und einem beweglich ausgebildeten Riegelelement (113; 113a; 413; 513), das das Befestigungselement (109; 109a; 409; 509) in der Gebrauchsstellung sichert ist, **dadurch gekennzeichnet, daß** das Riegelelement (113; 113a; 413; 513) in der Gebrauchsstellung unter Formschluß mit der Quertraverse (105; 105a; 405; 505) verriegelt, um das Befestigungselement (109; 109a; 409; 509) relativ zur Quertraverse (105; 105a; 405; 505) zu verriegeln, und daß das Befestigungselement (109; 109a; 409; 509) beim Schwenken in die Parkstellung und zurück das Riegelelement (113; 113a; 413; 513) mitnimmt.

2. Befestigungsvorrichtung nach Anspruch 1, **dadurch gekennzeichnet, daß** die Wirkungsrichtung des Riegelelementes (113; 113a; 413; 513) senkrecht zu der Schwenkebene des Befestigungselementes (109; 109a; 409; 509) liegt.

3. Befestigungsvorrichtung nach Anspruch 1 oder 2, **dadurch gekennzeichnet, daß** das Riegelelement (113; 113a; 413; 513) federbelastet ist.

4. Befestigungsvorrichtung nach einem der Ansprüche 1 bis 3, **dadurch gekennzeichnet, daß** das Riegelelement (113; 113a; 413; 513) durch Betätigung eines Betätigungsgriffes (115'; 115'a; 415') oder Schiebers (527) entriegelt.

5. Befestigungsvorrichtung nach einem der Ansprüche 1 bis 4, **dadurch gekennzeichnet, daß** das Riegelelement (113, 113a; 413; 513) auf einer Blattfeder (113'; 513') angeordnet ist.

6. Befestigungsvorrichtung nach einem der Ansprüche 1 bis 5, **dadurch gekennzeichnet, daß** das Riegelelement (113; 113a; 413; 513) an dem Befestigungselement (109; 109a; 409; 509) angebracht ist.

7. Befestigungsvorrichtung nach einem der Ansprüche 1 bis 6, **dadurch gekennzeichnet, daß** das Riegelelement (113; 113a; 413; 513) einen Vorsprung (115; 115a; 415; 515) aufweist, der zum Verriegeln in eine Aufnahme (117; 117a; 417; 517) der Quertraverse (105; 105a; 405; 505) greift.

8. Befestigungsvorrichtung nach einem der Ansprüche 1 bis 7, **dadurch gekennzeichnet, daß** das Riegelelement (113; 113a; 513) mit dem Befestigungselement (109; 109a; 509) auf einem Lagerzapfen (107, 507) der Quertraverse (105; 105a; 505) sitzt.

9. Fahrzeugsitz, insbesondere Kraftfahrzeugsitz, mit einer Befestigungsvorrichtung nach einem der Ansprüche 1 bis 8.

## Claims

1. Device for fixing a child seat to a vehicle seat, in particular to a motor vehicle seat, having at least one fixing element (109; 109a; 409; 509), which is pivotably supported on a transverse cross-piece (105; 105a; 405; 505) which is secured to a seat structure or to a vehicle structure, and which can be moved between a position for use and a non-use position, and having a locking element (113; 113a; 413; 513) which is constructed so as to be moveable and which secures the fixing element (109; 109a; 409; 509) in the position for use, **characterised in that** the locking element (113; 113a; 413; 513) locks in the position for use, with a positive-locking connection being formed with the transverse cross-piece (105; 105a; 405; 505), in order to lock the fixing element (109; 109a; 409; 509) relative to the transverse cross-piece (105; 105a; 405; 505), and **in that** the fixing element (109; 109a; 409; 509) carries the locking element (113; 113a; 413; 513) during pivoting into the non-use position and back.

2. Fixing device according to claim 1, **characterised in that** the operational direction of the locking element (113; 113a; 413; 513) is located perpendicularly relative to the pivot plane of the fixing element (109; 109a; 409; 509).

3. Fixing device according to claim 1 or 2, **characterised in that** the locking element (113; 113a; 413; 513) is resiliently loaded.

4. Fixing device according to any one of claims 1 to 3, **characterised in that** the locking element (113; 113a; 413; 513) unlocks by an operating handle (115'; 115'a; 415') or slide (527) being activated.

5. Fixing device according to any one of claims 1 to 4, **characterised in that** the locking element (113, 113a; 413; 513) is arranged on a leaf spring (113'; 513').

6. Fixing device according to any one of claims 1 to 5, **characterised in that** the locking element (113; 113a; 413; 513) is fitted to the fixing element (109; 109a; 409; 509).

7. Fixing device according to any one of claims 1 to 6, **characterised in that** the locking element (113; 113a; 413; 513) has a projection (115; 115a; 415; 515) which engages in a recess (117; 117a; 417; 517) of the transverse cross-piece (105; 105a; 405; 505) in order to lock.

8. Fixing device according to any one of claims 1 to 7, **characterised in that** the locking element (113; 113a; 513) is arranged with the fixing element (109; 109a; 509) on a bearing pin (107, 507) of the transverse cross-piece (105; 105a; 505).

9. Vehicle seat, in particular a motor vehicle seat, having a fixing device according to any one of claims 1 to 8.

## Revendications

1. Dispositif de fixation pour un siège d'enfant sur un siège de véhicule, en particulier sur un siège de véhicule automobile, comprenant au moins un élément de fixation (109 ; 109a ; 409 ; 509) qui est monté à pivotement sur une traverse transversale (105 ; 105a ; 405 ; 505) solidaire de la structure du siège ou de la structure du véhicule et peut se déplacer entre une position d'utilisation et une position de stationnement, et un élément de verrouillage (113 ; 113a ; 413 ; 513) construit de façon à être mobile, qui maintient l'élément de fixation (109 ; 109a ; 409 ; 509) dans la position d'utilisation, **caractérisé par le fait que**, dans la position d'utilisation, l'élément de verrouillage (113 ; 113a ; 413 ; 513), verrouille avec la traverse transversale (105 ; 105a ; 405 ; 505) par sûreté de forme pour verrouiller l'élément de fixation (109 ; 109a ; 409 ; 509) par rapport à la traverse transversale (105 ; 105a ; 405 ; 505), et **par le fait que** l'élément de fixation (109 ; 109a ; 409 ; 509) entraîne l'élément de verrouillage (113 ; 113a ; 413 ; 513) lorsqu'il pivote pour prendre la position de stationnement et qu'il revient en sens inverse.

2. Dispositif de fixation selon la revendication 1, **caractérisé par le fait que** le sens d'action de l'élément de verrouillage (113 ; 113a ; 413 ; 513) est perpendiculaire au plan de pivotement de l'élément de fixation (109 ; 109a ; 409 ; 509).

3. Dispositif de fixation selon l'une des revendications 1 ou 2, **caractérisé par le fait que** l'élément de verrouillage (113 ; 113a ; 413 ; 513) est sollicité par ressort.

4. Dispositif de fixation selon l'une des revendications 1 à 3, **caractérisé par le fait que** l'élément de verrouillage (113 ; 113a ; 413 ; 513) est déverrouillé par l'actionnement d'une poignée d'actionnement (115' ; 115'a ; 415') ou d'un poussoir (527).

5. Dispositif de fixation selon l'une des revendications 1 à 4, **caractérisé par le fait que** l'élément de verrouillage (113 ; 113a ; 413 ; 513) est agencé sur un ressort lame (113' ; 513').

6. Dispositif de fixation selon l'une des revendications 1 à 5, **caractérisé par le fait que** l'élément de verrouillage (113 ; 113a ; 413 ; 513) est attaché à l'élément de fixation (109 ; 109a ; 409 ; 509).

7. Dispositif de fixation selon l'une des revendications 1 à 6, **caractérisé par le fait que** l'élément de verrouillage (113 ; 113a ; 413 ; 513) présente une saillie (115 ; 115a ; 415 ; 515) qui s'engage dans un logement (117 ; 117a ; 417 ; 517) de la traverse transversale (105 ; 105a ; 405 ; 505) pour effectuer le verrouillage.

8. Dispositif de fixation selon l'une des revendications 1 à 7, **caractérisé par le fait que** l'élément de verrouillage (113 ; 113a ; 513) repose avec l'élément de fixation (109 ; 109a ; 509) sur un tourillon de portée (107, 507) de la traverse transversale (105 ; 105a ; 505).

9. Siège de véhicule, en particulier siège de véhicule automobile, comprenant un dispositif de fixation tel que défini à l'une des revendications 1 à 8.
